# EUROPEAN PATENT APPLICATION

(11) **EP 3 772 638 A1**
(43) Date of publication of application: **10.02.2021**
(21) Application number: 19190750.0
(22) Date of filing: 08.08.2019
(51) Int. Cl.: G01K 1/12, G01K 7/16

(54) **THERMAL SENSOR WIRE AND METHOD OF ASSEMBLING THE SAME**

(71) Applicant: Ztove ApS, 5260 Odense S (DK)
(72) Inventor: Favrholdt, Peter, DK-5220 Odense SOE (DK); Storm Koldkjaer, Karl-Emil, DK-5260 Odense S (DK)
(74) Representative: Klimaitiene, Otilija

(57) **Abstract**

The invention discloses a method of assembling a thermal sensor wire comprising an RTD element and a wire and encapsulating into a thermally conductive flexible insulator. The method is simple and useful for assembling thermal sensor wires for temperatures in range to at least of 400°C, for example, in cookware applications. This invention distinguishes from the state-of-art concept that the RTD element has to be placed as an extension of the wire. The RTD element is aligned to the wire conductors with straight lead-ins of the RTD element being positioned to the same direction, the RTD element is laid onto the wire; the lead-ins and conductors welded; further, the RTD element and wire are encapsulated into a thermally resistant flexible insulator. Any thermal expansion of materials around the RTD element assembly does not cause stress on the welded joints. This thermal sensor wire assembly is easier to manufacture, it requires fewer steps and adding the insulation is easier.

## Description

### FIELD OF INVENTION

The present invention relates to methods of assembling and implementing sensors and wires, and in particular to methods of assembling and welding Resistance Temperature Detector (RTD) element to wire conductors, and encapsulating both RTD element and a part of the wire into a thermally conductive flexible insulating material.

### BACKGROUND OF INVENTION

There are thermal sensing applications that employ sensors of various types, packages, temperature ranges, precision ranges, and other characteristics. Thermal sensors for higher temperatures have to have their contacts not soldered but welded to the wire conductors. Another technical requirement is to implement the sensor into the probe, enclosure or shield to protect the sensor from external impacts.

A simple wire attachment and soldering technique are not applicable for high-temperature sensors because of low melting point temperature of solder (around 200 °C), non-resistant insulation and special materials and requirements of sensors, like welding of contacts and non-desired bending of RTD element lead-ins. These elements almost always require insulated leads attached. PVC, silicone rubber or PTFE insulators are used at temperatures below about 250°C. Above this temperature, glass fiber or ceramic are mostly used. The measuring point, and usually most of the leads, requires a housing or protective sleeve, often made of a metal alloy that is chemically inert to the process being monitored. Selecting and designing protection sheaths for thermo-sensors can require more care than the actual sensor, as the protection sheath must withstand a chemical or physical attack of the process being monitored and provide convenient attachment points.

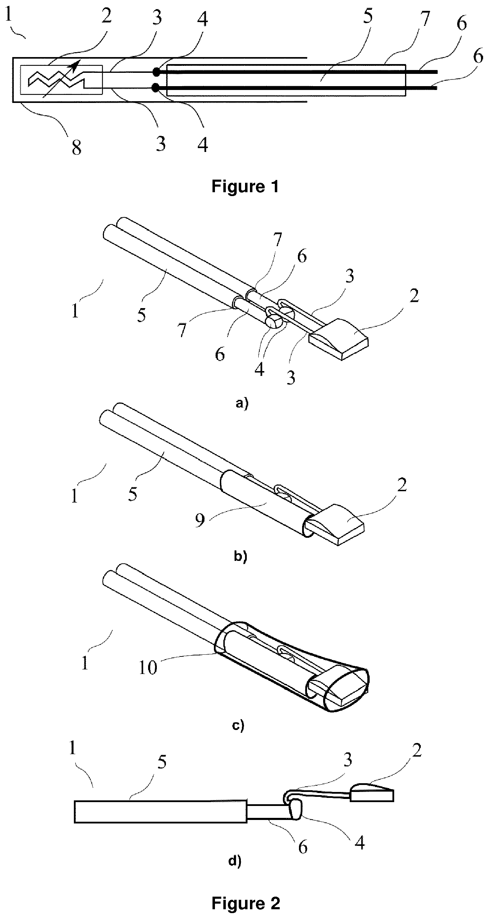

Resistance thermometers or RTD elements are the most widespread ones of thermal sensors (Figure 1). The three main categories of RTD elements are thin-film, wire-wound, and coiled elements. These types are the ones widely used in the industry.

Thin-film RTD elements comprise a sensing element that is formed by depositing a very thin layer of resistive material, normally platinum, on a ceramic substrate (plating). This layer is usually just 10 to 100 angstroms (1 to 10 nanometers) thick. This film is then coated with an epoxy or glass that helps protect the deposited film and also acts as a strain relief for the external lead wires. The disadvantages are that they are not as stable as wire-wound or coiled RTD elements. Thin-film RTD elements also can only be used over a limited temperature range due to the different expansion rates of the substrate and resistive deposited giving a "strain gauge" effect that can be seen in the resistive temperature coefficient. These elements work with temperatures to 300 C (572 F) without further packaging but can operate up to 600 C (1,112 F) when suitably encapsulated in glass or ceramic. Special high-temperature RTD elements can be used up to 900 C (1,652°F) with the right encapsulation.

Wire-wound elements can have greater accuracy, especially for wide temperature ranges. The coil diameter provides a compromise between mechanical stability and allowing expansion of the wire to minimize strain and consequential drift. The sensing wire is wrapped around an insulating mandrel or core. The winding core can be round or flat but must be an electrical insulator. The coefficient of thermal expansion of the winding core material is matched to the sensing wire to minimize any mechanical strain. This strain on the element wire will result in a thermal measurement error. The sensing wire is connected to a larger wire, usually referred to as the element lead or wire. This wire is selected to be compatible with the sensing wire so that the combination does not generate an electromotive force that would distort the thermal measurement. These elements work with temperatures to 660°C.

Coiled elements have largely replaced wire-wound elements in the industry. This design has a wire coil that can expand freely over temperature, held in place by some mechanical support, which lets the coil keep its shape. This "strain free" design allows the sensing wire to expand and contract free of influence from other materials; in this respect, it is similar to the SPRT, the primary standard upon which ITS-90 is based while providing the durability necessary for industrial use. The basis of the sensing element is a small coil of platinum sensing wire. This coil resembles a filament in an incandescent light bulb. The housing or mandrel is a hard-fired ceramic oxide tube with equally spaced bores that run transverse to the axes. The coil is inserted in the bores of the mandrel and then packed with a very finely ground ceramic powder. This permits the sensing wire to move, while still remaining in good thermal contact with the process. These elements work with temperatures to 850°C.

For cookware applications, the temperature of 300-400°C is a sufficiently high upper limit of the temperatures range. Therefore, Thin Film RTD elements are applicable due to their low price and simple implementation. However, this range of temperatures still requires careful assembling of RTD elements and sensing wires which would not fail during a long time of operation, survive physical impacts and multiple changes of temperature.

Patent application WO2009146447A1 describes a high vibration thin-film RTD element capable of operation in a high vibration environment includes a sensor sheath mounted at the distal end of a mineral insulated cable. An RTD element is connected to leads of the cable within the sheath. The sheath is filled at least partially with a ceramic thermal adhesive. However, this sensor has complex construction and requires a complex method for implementation of it in temperature sensing environments, also complex welding to the wire is required.

Another patent application US4590669A describes a method of preparing resistance thermometer having an RTD element fixedly supported within a tubular metallic sheath by a compacted insulating material is manufactured by integrally connecting in series two tubular metallic sheaths by pressure welding. The first sheath has a smaller diameter portion which can be inserted into and received by the second sheath. The manufacture method includes the steps of: supporting electrical conductors in the first sheath using the insulating material, electrically joining the RTD element to the conductors supported in the first sheath, putting a metallic ring on the smaller diameter portion of the first sheath, inserting the smaller diameter portion of the first sheath into the second sheath with the RTD element being accommodated within the second sheath, and ramming the metallic ring radially inwardly so that the first and second sheaths are integrally bonded by pressure welding. After the pressure welding, the second sheath is filled with the insulating material for fixation of the RTD element and a closure element is attached to the open end of the second sheath to complete the resistance thermometer. However, this sensor has complex construction and requires a complex method for implementation of it in temperature sensing environments, also complex welding to the wire is required.

By reviewing the above prior art sources and assessing the thermal sensor wire constructions, the sufficient temperature range for cookware applications is up to 300°C. Wire wound and Coiled RTD elements are less applicable for cookware because of higher price and too complex implementation, therefore, Thin Film RTD elements are sufficient. Nevertheless, in cookware applications, during heating and cooling the materials expand and contract at different rates. This can cause amounts of mechanical stress. The stress can break the welds between RTD elements and wire. The wires are welded to the RTD element while aligning RTD element lead-ins and wire conductors by opposite directions and welding them. Also, the RTD element becomes more susceptible to physical impacts when welded as the extension of the wire.

Another approach is to use the alignment of the RTD element lead-ins and wire conductors in the same direction but the RTD element further is bent by 180 degrees into the opposite direction as it is depicted in Figure 2. The issue with this design is that it is very susceptible to metal fatigue. The production process involves bending the RTD element's wires by an angle of 180° degrees. The bending makes metal fatigue even more prevalent. Figure 2 shows how the RTD element is bent. The bent wire causes a stress concentration at the welding spot when the RTD element and the wires are pulled apart, which further increases the likelihood of failure.

### SUMMARY

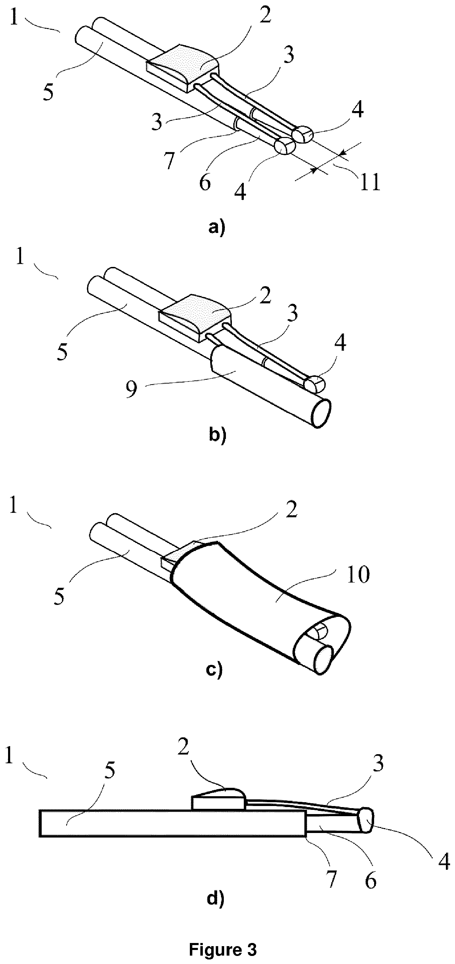

This invention is a modification of the conventional assembling and wiring thermal sensor wires with RTD elements, wherein said modification solves the issues described in the previous chapter. By reversing the direction of the RTD element, the issues in the sensor-to-wire assembly are eliminated. Any expansion of materials around the RTD elements assembly will not cause any stress onto the welded joint. The stress concentration is eliminated as the conductors in the sensor-to-wire assembly are parallel. The assembly is easier to manufacture because it requires fewer steps and adding the insulation is easier. Particularly, for thermal sensor wires comprising Thin Film RTD elements, this type of thermal sensor wire and method of assembling the same are inventive in the industry as the professionals would use methods of thermal sensor wire assembling described in the state of the art. The present invention (Figure 3) distinguishes from the state-of-art concept (Figure 2) of thermal sensor wires having the RTD element placed as an extension of the wires.

### DESCRIPTION OF DRAWINGS

To understand the thermal sensor wire and its assembling method, and appreciate its practical applications, the following pictures are provided and referenced hereafter. Figures are given as examples only and in no way should limit the scope of the invention.
- Figure 1: a general representation of a thermal sensor wire comprising Resistance Temperature Detector (RTD) element;
- Figure 2: representation of attaching a Thin Film RTD element to a wire by using state-of-the-art approach; the RTD element being the extension of the wire; attaching RTD element to the wire with lead-ins bent by the angle of 180 degrees;

- Figure 3: representation of attaching a Thin Film RTD element to a wire by a novel approach, the RTD element being laid onto the wire insulation, and the lead-ins of the wire and the element are welded while being both aligned to the same direction;
- Figures 4 a-c: representations of practical applications of the thermal sensor wire in cookware: a) fry pan; b) teppanyaki griddle; c) thermometer.

### DRAWINGS - Reference Numerals

- **1**: Thermal sensor wire;
- **2**: Resistance Temperature Detector (RTD) element;
- **3**: lead-ins of RTD element;
- **4**: Welded contacts between RTD element lead-ins and wire conductors;
- **5**: wire;
- **6**: wire conductors;
- **7**: wire insulation layer;
- **8**: shielding of RTD element;
- **9**: flexible insulation tube for the RDT element lead-in;
- **10**: flexible insulation tube for shielding the RDT element;
- **11**: distance between RTD element lead-ins and between wire conductors;
- **12**: fry pan;
- **13**: bottom layer of the fry pan with a hole for the thermal sensor wire;
- **14**: control electronics of RTD element;
- **15**: teppanyaki griddle having thermal sensor wires;
- **16**: bottom layer of the teppanyaki griddle with holes for thermal sensor wires;
- **17**: heating compartment of the teppanyaki griddle;
- **18**: thermometer: needle-shaped stainless steel tube (probe);
- **19**: thermometer: thermally conductive material filled inside the tube;
- **20**: Environment for temperature sensing application.

### DETAILED DESCRIPTION OF PREFERRED EMBODIMENTS

The detailed description discloses thermal sensor wire (1) components, steps of assembling a thermal sensor wire (1), and embodiments of the thermal sensor wire (1) implementation in cookware applications.

**Thermal sensor wire components.** The thermal sensor wire (1) comprises at least these components:
- Thin-film RTD element (2) with straight lead-ins;
- Wire (5) with a number of conductors (6) equal to the number of RTD element's lead-ins (3). In most preferred embodiments, the number of RTD element lead-ins and wire conductors is 2.
- Insulation tube (9) for a single lead-in, to insulate the two RTD element's lead-ins each from another.
- Insulation tube (10) for the whole RTD element (2), to insulate it together with a segment of wire (5).

Distance (11) between the RTD element lead-ins (3) and between the wire conductors (6) are at least the same when RTD lead-ins are aligned in parallel to the wire conductors (6). The wire (5) comprises the insulation layer (7) which has the working temperature range of at least from -50 to 400°C degrees. The flexible insulation tubes (9, 10) or the RTD element (2) and the wire (5) also have the working temperature of at least from -50 to 400°C degrees.

**Assembling of thermal sensor wire.** Assembling of thermal sensor wire (1) is done at least by the following steps:
1. Aligning the RTD element (2) to the wire (5). This is done by:
   a. aligning the lead-ins (3) of the RTD element (2) to the wire conductors (6) wherein both the straight lead-ins (3) of the RTD element (2) and the wire conductors (6) for welding are positioned in the same direction (Figure 3);
   b. The RTD element (2) is laid down onto insulation (7) of the wire (5);
2. Welding the lead-ins (3) of the RTD element (2) and the conductors (6) of the wire (5),
3. Insulating the RTD element lead-ins (3) and wire conductor (6) into a thermally resistant and flexible insulation tube (9).
4. Insulating the RTD element (2) together with a wire (5) segment comprising wire conductors (6) and the thermally resistant and flexible insulation tube (9) of one of the wire conductors (6) into thermally resistant and flexible insulation tube (10).

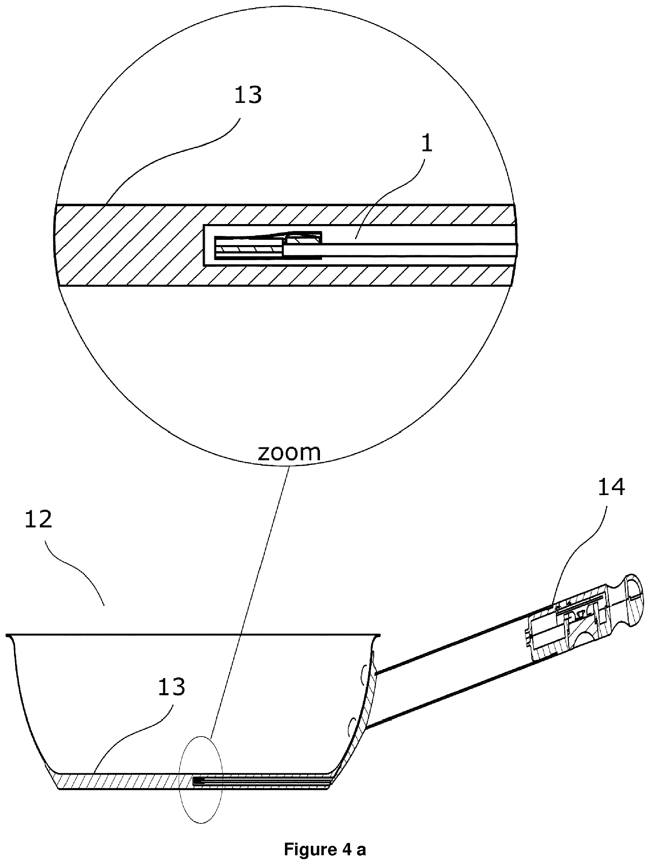

**Application embodiments.** In the preferred embodiment and as depicted in figure 4a the thermal sensor wire (1) is implemented in a variety of cookware tools and pots. For example, a fry pan (12) having a function of precise regulation of the fry pan bottom (13) temperature. The fry pan (12) has a thermal sensor wire (1) implemented inside of the fry pan bottom layer (13) which, therefore, serves as the protective shielding (8) for the thermal sensor wire (1). Further, the thermal sensor wire (1) has a connection with sensing electronics (14), versatile smart devices for reading the temperature values and further managing the heating intensity of the cooker. The fry pan bottom layer (13) comprises a hole for the insertion of the thermal sensor wire (1) such that RTD element (2) reaches the center of the fry pan bottom layer (13).

Another embodiment is a cooking pot having the bottom layer comprising a hole in the bottom layer and the thermal sensor wire implemented into it. Construction of said bottom layer is the same as the fry pan described above and also serves as the protective shielding (8) for the thermal sensor wire (1).

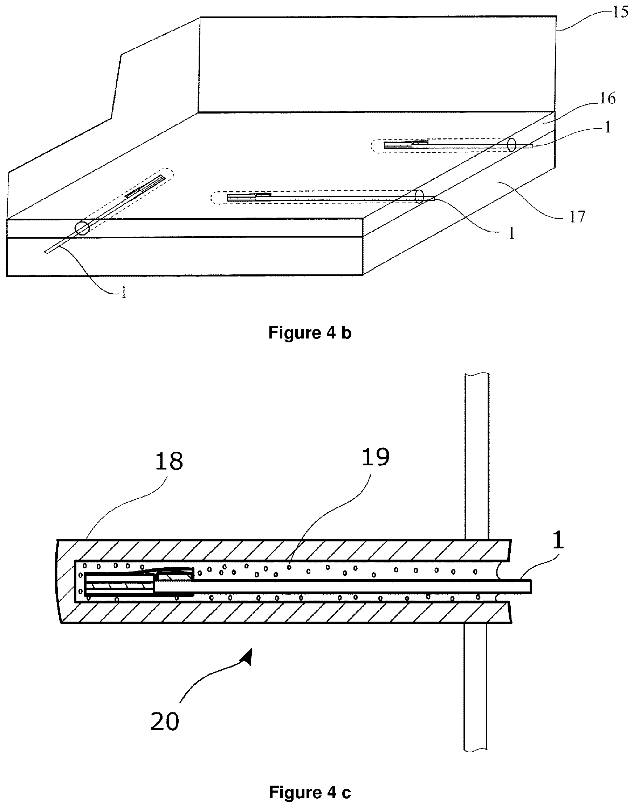

One more embodiment is a teppanyaki griddle (15) with the heated bottom layer (16) comprising at least one hole in the bottom layer (16) and thermal sensor wires (1) implemented. Since the heated area of teppanyaki griddles is large there can be several thermal sensor wires implemented into the heated bottom layer (16) which also serves as the protective shielding (8) for thermal sensor wires (1). An example construction of such teppanyaki griddle having several thermal sensor wires is presented in figure 4b. The heating compartment (17) of the griddle comprises heating elements which have their heating function regulated by the thermal sensor wires implemented in the heated bottom layer (16).

One more embodiment is a thermometer comprising a needle-shaped stainless steel tube (18) filled with thermally conductive filling material (19) before placing the thermal sensor wire (1) into the tube 18, as depicted in figure 4c. Said filling material (19) withstands range of temperatures and protects the thermal sensor wire (1) from water, air and dirt. Such a needle-shaped thermometer is applicable in cookware and other applications. Said needle-shaped stainless steel tube (18) serves as the protective shielding (8) for the thermal sensor wire (1).

## Claims

1. A sensor wire (1) comprising, at least:
- a sensor element (2) wherein it is Thin Film type Resistance Temperature Detector (RTD),
- a wire (5) wherein the wire conductors (6) are welded to lead-ins (3) of the sensor element (2),
- insulation of the lead-ins (3) and sensor element (2),
- shielding (8),
**characterized in that**
- the sensor element (2) lead-ins (3) are straight and aligned to the straight wire (5) conductors (6) with said lead-ins (3) and wire (5) conductors (6) being positioned to the same direction;
- the sensor element (2) is laid down onto the wire insulation (7);

2. The sensor wire (1) according to claim 1 **characterized in that** the distance (11) between the lead-ins (3) of the sensor element (2) and between the conductors (6) of the wire (5) is at least the same.

3. The sensor wire (1) according to claim 1 **characterized in that** the wire (5) of the sensor wire (1) comprises insulation layer (7) with the working temperature range of at least from -50 to 400°C degrees;

4. The sensor wire (1) according to claim 1 **characterized in that** the insulation tube (9) for the sensor element (2) lead-in (3) and wire (5) conductor (6) has the working temperature range of at least from -50 to 400°C degrees;

5. The sensor wire according to claim 1, **characterized in that** the insulation tube (10) for the sensor element (2) and the wire (5) is a flexible insulator having the working temperature range of at least from -50 to 400°C degrees;

6. A method of assembling the sensor wire (1) according to claim 1, comprising steps at least of:
- aligning the sensor element (2) lead-ins (3) to the wire (5) conductors (6),
- welding the lead-ins (3) of said sensor element (2) to said wire (5) conductors (6),
- insulating the sensor element (2) lead-ins (3) and wire conductors (6),
- insulating the sensor element (2) and the wire (5),
- shielding (8) the sensor wire (1),
**characterized in that**
- the sensor element (2) lead-ins (3) are straight and aligned to the straight wire (5) conductors (6) with said lead-ins (3) and wire (5) conductors (6) being positioned to the same direction;
- the sensor element (2) is laid down onto the wire insulation (7);

7. The method according to claim 6, **characterized in that** the sensor wire (1) comprising the shielding (8) has embodiments, at least, in cookware applications (13,16) and thermometer probes (18).
